# EUROPÄISCHE PATENTSCHRIFT

(11) **EP 1 206 633 B1**
(45) Veröffentlichungstag und Bekanntmachung des Hinweises auf die Patenterteilung: **20.10.2004**
(21) Anmeldenummer: 00967530.7
(22) Anmeldetag: 18.08.2000
(51) Int. Cl.: F02B 31/08

(54) **ANSAUGEINRICHTUNG FÜR EINE BRENNKRAFTMASCHINE**
SUCTION INTAKE DEVICE FOR AN INTERNAL COMBUSTION MACHINE
DISPOSITIF D'ASPIRATION POUR MOTEUR A COMBUSTION INTERNE

(30) Priorität: 24.08.1999 DE 19940053
(43) Veröffentlichungstag der Anmeldung: 22.05.2002
(73) Patentinhaber: SIEMENS AKTIENGESELLSCHAFT, 80333 München (DE)
(72) Erfinder: FISCHER, Peter, 93152 Nittendorf (DE); DIETZ, Armin, 93055 Regensburg (DE)
(86) Internationale Anmeldenummer: PCT/DE2000/002826
(87) Internationale Veröffentlichungsnummer: WO 2001/014701

(56) Entgegenhaltungen:
- EP-A- 0 500 123
- EP-A- 0 861 977
- AT-U- 2 743
- DE-A- 19 941 863
- US-A- 4 768 487
- US-A- 5 101 792
- US-A- 5 875 758
- PATENT ABSTRACTS OF JAPAN vol. 009, no. 057 (M-363), 13. März 1985 (1985-03-13) & JP 59 192825 A (TOYOTA JIDOSHA KK), 1. November 1984 (1984-11-01)

## Beschreibung

Die Erfindung betrifft eine Ansaugeinrichtung für eine Brennkraftmaschine gemäß dem Oberbegriff des Patentanspruchs 1.

Aus der DE 196 22 891 C2 ist eine Ansaugeinrichtung für eine Brennkraftmaschine bekannt, die einen Flansch hat, an dem die Ansaugeinrichtung an einem Flansch des Zylinderkopfes befestigbar ist. Ferner sind der Ansaugeinrichtung Saugrohre zugeordnet, die als zwei Einlaßkanäle pro Zylinder ausgebildet sind, wovon bei je einem dieser der freie Querschnitt des jeweiligen Einlaßkanals mittels einer Klappe verschließbar ist. Eine Welle ist mittels einer Bohrung in den jeweiligen Einlaßkanal eingebracht. Die Schaltklappe ist mittels Befestigungselementen an der Welle befestigt. Die Herstellung der bekannten Ansaugeinrichtung ist äußerst aufwendig und damit kostspielig, da eine eigene Bohrung für die Welle vorgesehen werden muß, die Welle zuerst ohne die Klappe in die Bohrung eingebracht werden muß und anschließend die Klappe auf die Welle montiert werden muß.

Aus der DE 195 04 382 A1 ist eine Ansaugeinrichtung für eine Brennkraftmaschine bekannt, mit einem Flansch, an dem die Ansaugeinrichtung an einem Flansch des Zylinderkopfes befestigbar ist, und mit Saugrohren, die zumindest im Bereich des Flansches der Ansaugeinrichtung als mindestens zwei Einlasskanäle pro Zylinder ausgebildet sind, wovon bei je mindestens einem dessen freier Querschnitt mittels einer Klappe verschließbar ist. Die Klappenanordnung wird mittels eines Lagerrahmens auf der Flanschseite des Ansaugsystems abgestützt. Alternativ wird die Klappenanordnung über Schnappelemente an dem Ansaugsystem befestigt. Eine Dichtung ist vorgesehen, die das Ansaugsystem zu dem Motorblock hin abdichtet.

Die Aufgabe der Erfindung ist es, die bekannte Ansaugeinrichtung zu vereinfachen.

Die Aufgabe wird erfindungsgemäß durch die Merkmale des Patentanspruchs 1 gelöst. Die Erfindung zeichnet sich dadurch aus, daß die Klappe mit der Welle und dem Lager von der dem Zylinderkopf der Brennkraftmaschine zugewandten Seite des Flansches der Ansaugeinrichtung einbringbar ist. Somit können die Welle die Lager und die Klappe bereits vor dem Einbringen in die Ansaugeinrichtung vormontiert werden und damit kann vorteilhafterweise die Klappe durch einfaches Umspritzen der Welle mit Kunststoff ausgebildet werden.

Vorteilhafte Ausgestaltungen der Erfindung sind in den Unteransprüchen gekennzeichnet. Ausführungsbeispiele der Erfindung sind im folgenden unter Bezugnahme auf die schematischen Zeichnungen erläutert. Es zeigen:

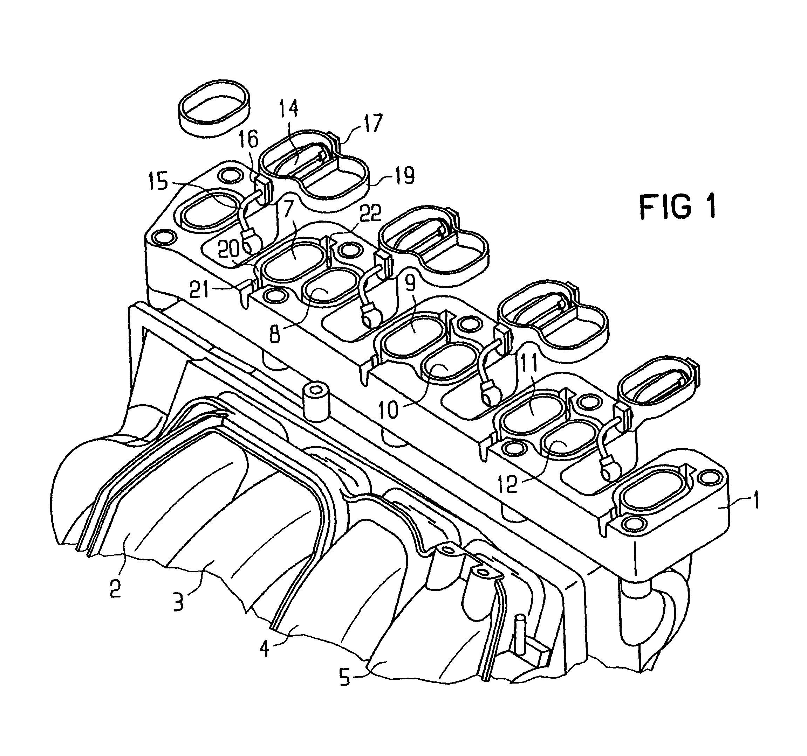

Figur 1 eine Explosionsdarstellung der Ansaugeinrichtung,

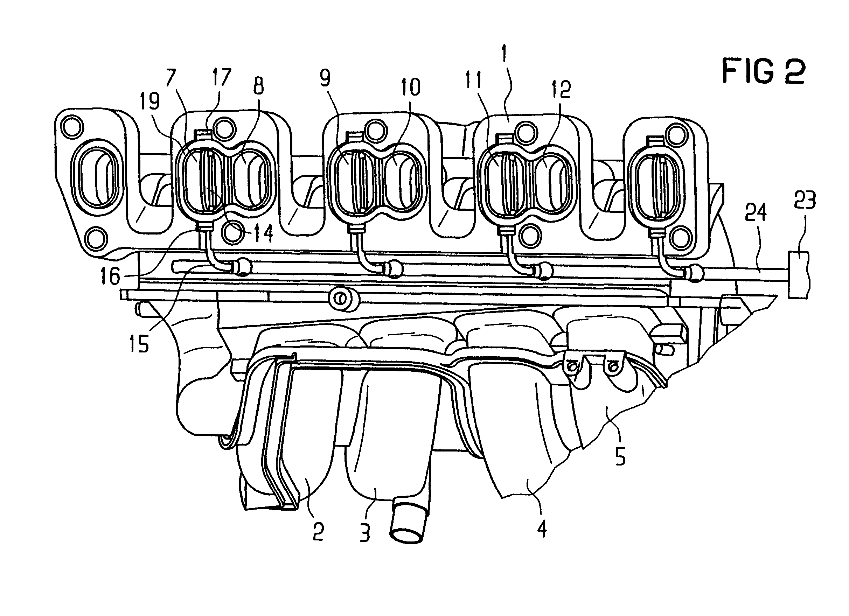

Figur 2 eine weitere Ansicht der Ansaugeinrichtung und
Figur 3 ein Schnitt durch einen Teil der Ansaugeinrichtung im montierten Zustand an einem Zylinderkopf.

Eine Ansaugeinrichtung für eine Brennkraftmaschine weist einen Flansch 1 und Saugrohre 2, 3, 4, 5 auf. Die Saugrohre 2 bis 5 erstrecken sich von einem nicht dargestellten Sammler hin zu dem Flansch, wobei sie sich auf dem Weg von dem Sammler hin zu dem Flansch zu jeweils zwei Einlaßkanälen 7, 8; 9, 10; 11, 12 ausbilden. Bei jeweils einem der paarweise aus dem jeweiligen Saugrohr 2 bis 5 hervorgehenden Einlaßkanäle 7, 9, 11 sind jeweils Klappen 14 derart angeordnet, daß der freie Querschnitt des jeweiligen Einlaßkanals 7, 9, 11 mittels der Klappe 14 verschließbar ist.

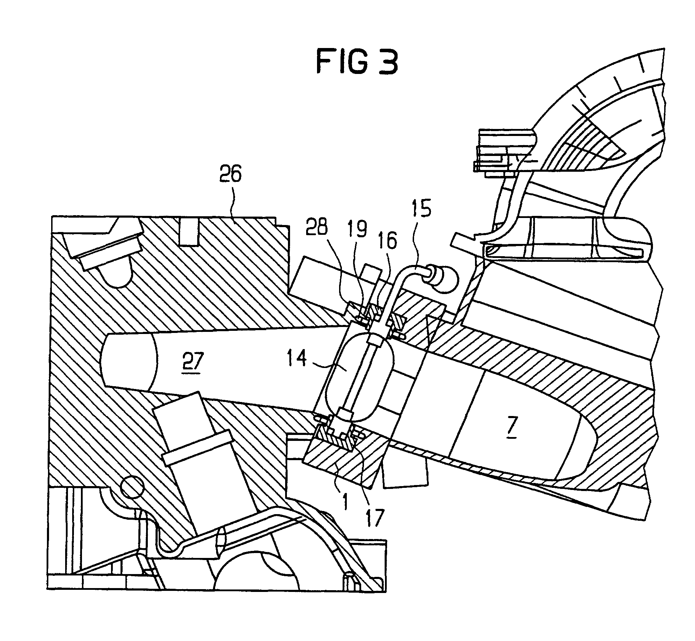

Der Flansch 1 der Ansaugeinrichtung kann mittels Befestigungselementen an einem Flansch 28 eines Zylinderkopfs 26 befestigt werden (Figur 3). In dem Zylinderkopf 26 ist ein weiterer Einlaßkanal 27 ausgebildet und zwar derart, daß im angeflanschten Zustand der Ansaugeinrichtung die Luft von dem Einlaßkanal 7 in den weiteren Einlaßkanal 27 und von dort in einen nicht dargestellten Zylinder strömen kann.

Eine Welle 15 ist vorgesehen, auf der die Klappe 14 angeordnet ist. Vorzugsweise wird die Klappe durch einfaches Umspritzen der Welle 15 mit Kunststoff ausgebildet. Das Umspritzen der Welle 15 mit Kunststoff ist äußerst kostengünstig. Ferner sind auf der Welle 15 Lager 16 und 17 vorgesehen, die vorzugsweise ebenso aus Kunststoff ausgebildet sind. Ferner ist eine Dichtung 19 vorgesehen, die den freien Querschnitt mindestens eines Einlaßkanals 7, 8; 9, 10; 11, 12 auf der dem Zylinderkopf 26 zugewandten Seite des Flansches 1 der Ansaugeinrichtung umschließt.

Im bevorzugten Ausführungsbeispiel ist die Dichtung 19 einstückig für jeweils ein Paar an Einlaßkanälen 7, 8; 9, 10; 11, 12 ausgebildet. Die Dichtung 19 ist zwischen den beiden Flanschen 1, 28 derart angeordnet und so ausgebildet, daß die Einlaßkanäle 7, 14, 8 im Bereich der Flansche gegenüber der Umgebung abgedichtet sind und gleichzeitig die Lager 16,17 gegenüber der Umgebung abgedichtet sind. Dabei wird als Umgebung der die Ansaugeinrichtung und den Zylinderkopf 26 umgebende Bereich bezeichnet.

Die Dichtung 19 ist in einer Nut 20 angeordnet, die in dem Flansch 1 der Ansaugeinrichtung auf der dem Zylinderkopf 26 zugeordneten Seite des Flansches 1 ausgebildet ist und die den freien Querschnitt jeweils eines Einlaßkanals 7, 8, 9, 10, 11, 12 umschließt. Vorzugsweise ist die Nut 20 so ausgebildet, daß sie auch zusätzlich den freien Querschnitt jeweils eines zweiten Einlaßkanals umschließt.

In der Nut 20 sind ferner Bereiche 21, 22 zum Einbringen der Lager 16, 17 ausgebildet. Die Lager 16, 17 sind mit der Dichtmasse, aus der die Dichtung 19 ausgebildet ist, umspritzt. Somit können die Welle 15, die Lager 16, 17, die Klappe 14 und die Dichtung 19 bereits vor dem Einbringen in die Ansaugeinrichtung vormontiert werden.

Die Lager 16, 17 und die Dichtung 19 und die Klappe 14 und die Welle 15 sind von der dem Zylinderkopf zugewandten Seite des Flansches der Ansaugeinrichtung in die Nut 20 eingebracht. Wenn der Flansch 1 der Ansaugeinrichtung an dem Flansch 28 des Zylinderkopfs 26 befestigt ist, sind die Dichtung 19 und die Lager 16, 17 verpreßt. Dies hat einerseits den Vorteil, daß sowohl die Einlaßkanäle dichtend durch die Flansch 1, 28 geführt sind und andererseits auch die Lager der Klappen gegen die Umgebung dichtend abgedichtet sind. Ferner kann auf Lagerdeckel für die Lager 16, 17 verzichtet werden, da der Flansch 28 des Zylinderkopfes als Lagerdeckel wirkt.

Die Ansaugeinrichtung umfaßt ferner eine Schalteinrichtung 23, die über einen Koppelmechanismus 24 mit den Wellen 15 der Klappen 14 mechanisch gekoppelt ist und über die die Klappen 14 betätigbar sind. Abhängig von der jeweiligen Stellung der Klappen 14 kann in den nicht dargestellten Zylindern der Brennkraftmaschine eine Drallströmung erzeugt werden, wie sie insbesondere bei Brennkraftmaschinen mit Direkteinspritzung des Kraftstoffs vorteilhaft ist.

Die Lager sind vorzugsweise auch aus Kunststoff ausgebildet und tragen so zur Gewichtseinsparung bei der Ansaugeinrichtung bei. Die Dichtung ist bevorzugt aus einem Elastomer, insbesondere aus einem NBR-Werkstoff (Acrylnitril-Wutadien-Kautschuk) ausgebildet.

Die Erfindung ist nicht auf das beschriebene Ausführungsbeispiel beschränkt. Beispielsweise können auch mehr als zwei Einlaßkanäle pro Zylinder vorgesehen sein oder in mehr als einem der jeweils einem Zylinder zugeordneten Einlaßkanäle Klappen angeordnet sein.

## Patentansprüche

1. Ansaugeinrichtung für eine Brennkraftmaschine mit einem Flansch (1), an dem die Ansaugeinrichtung an einem Flansch (28) des Zylinderkopfes (26) befestigbar ist, und mit Saugrohren (2-5), die zumindest im Bereich des Flansches (1) der Ansaugeinrichtung als mindestens zwei Einlasskanäle (7,8;9,10;11,12) pro Zylinder ausgebildet sind, wovon bei je mindestens einem dessen freier Querschnitt mittels einer Klappe (14) verschließbar ist, wobei der Flansch (1) und die Klappe (14) mit einer Welle (15) und einem Lager (16,17) derart ausgebildet sind, dass die Klappe (14) mit der Welle (15) und dem Lager (16,17) von der dem Zylinderkopf (26) zugewandten Seite des Flansches (1) einbringbar ist, **dadurch gekennzeichnet, dass** eine Dichtung (19) vorgesehen ist, die zwischen den beiden Flanschen (1,28) derart angeordnet ist und so ausgebildet ist, dass die Einlasskanäle (7,8;9,10;11,12) im Bereich der Flansche (1,28) gegenüber der Umgebung abgedichtet sind und gleichzeitg die Welle (15) gegenüber der Umgebung abgedichtet ist.

2. Ansaugeinrichtung nach Anspruch 1, **dadurch gekennzeichnet, dass** die Dichtung (19) in einer Nut (20) des Flansches (1) angeordnet ist, die auf der dem Zylinderkopf (26) zugewandten Seite des Flansches (1) ausgebildet ist und den freien Querschnitt mindestens eines Einlasskanals (7,8;9,10;11,12) auf dieser Seite umschließt.

3. Ansaugeinrichtung nach Anspruch 2, **dadurch gekennzeichnet, dass** in der Nut (20) Bereiche zum Einbringen der Lager (16,17) ausgebildet sind.

4. Ansaugeinrichtung nach einem der vorstehenden Ansprüche, **dadurch gekennzeichnet, dass** eine Schalteinrichtung (23) vorgesehen ist, die über einen Koppelmechanismus (24) mit den Wellen (15) der Klappen (14) gekoppelt ist.

5. Ansaugeinrichtung nach einem der vorstehenden Ansprüche, **dadurch gekennzeichnet, dass** die Klappe (14) durch Umspritzen der Welle (15) mit Kunststoff ausgebildet ist.

6. Ansaugeinrichtung nach einem der vorstehenden Ansprüche, **dadurch gekennzeichnet, dass** die Lager (16,17) aus Kunststoff ausgebildet sind.

7. Ansaugeinrichtung nach einem der vorstehenden Ansprüche, **dadurch gekennzeichnet, dass** die Lager (16,17) mit der Dichtmasse der Dichtung (19) umspritzt sind.

8. Ansaugeinrichtung nach einem der vorstehenden Ansprüche, **dadurch gekennzeichnet, dass** die Einlasskanäle (7,8;9,10;11,12) zum Erzeugen einer Drallströmung in den Zylindern ausgebildet sind.

## Claims

1. Intake device for an internal combustion engine with a flange (1), at which the intake device can be attached to a flange (28) of the cylinder head (26), and with intake pipes (2-5), which are designed as at least two inlet ducts (7, 8; 9, 10; 11, 12) per cylinder, at least in the region of the flange (1) of the intake device, the free cross section of at least one of these intake ducts in each case being capable of being closed by means of a flap (14), the flange (1) and the flap (14) with a shaft (15) and a bearing (16, 17) being formed in such a way that the flap (14) can be introduced with the shaft (15) and the bearing (16, 27) from that side of the flange (1) that faces the cylinder head (26), **characterized in that** a seal (19) is provided, which is arranged and formed in such a way between the two flanges (1, 28) that the inlet ducts (7, 8; 9, 10; 11, 12) are sealed off with respect to the surroundings in the region of the flanges (1, 28), and the shaft (15) is simultaneously sealed off with respect to the surroundings.

2. Intake device according to Claim 1, **characterized in that** the seal (19) is arranged in a groove (20) of the flange (1), which groove is formed on that side of the flange (1) that faces the cylinder head (26) and surrounds the free cross section of at least one inlet duct (7, 8; 9, 10; 11, 12) on this side.

3. Intake device according to Claim 2, **characterized in that** regions for the introduction of the bearings (16, 17) are formed in the groove (20).

4. Intake device according to any of the preceding claims, **characterized in that** a switching device (23) is provided, which is coupled to the shafts (15) of the flaps (14) via a coupling mechanism (24).

5. Intake device according to any of the preceding claims, **characterized in that** the flap (14) is formed by moulding plastic around the shaft (15).

6. Intake device according to any of the preceding claims, **characterized in that** the bearings (16, 17) are formed from plastic.

7. Intake device according to any of the preceding claims, **characterized in that** the sealing compound of the seal (19) is moulded around the bearings (16, 17).

8. Intake device according to any of the preceding claims, **characterized in that** the inlet ducts (7, 8; 9, 10; 11, 12) are designed to produce a swirling flow in the cylinders.

## Revendications

1. Dispositif d'admission pour un moteur à combustion interne avec un flasque (1), avec lequel le dispositif d'admission peut être fixé à un flasque (28) de la culasse (26), et avec des tuyaux d'admission (2-5) qui sont formés, au moins dans la zone du flasque (1) du dispositif d'admission, par au moins deux canaux d'admission par cylindre (7, 8; 9, 10; 11 , 12), au moins une section transversale libre d'un de ces canaux d'admission pouvant être fermée par un clapet (14), le flasque (1) et le clapet (14) étant formés avec un arbre (15) et un palier (16, 17) de telle façon que le clapet (14) peut être mis en place avec l'arbre (15) et le palier (16, 17) du côté du flasque (1) adjacent à la culasse (26), **caractérisé en ce qu'**un joint (19) est prévu, qui est disposé entre les deux flasques (1, 28) et est formé de telle façon que les canaux d'admission (7, 8 ; 9, 10; 11, 12) sont rendus étanches par rapport à l'environnement dans la zone des flasques (1, 28) et, en même temps, l'arbre (15) est rendu étanche par rapport à l'environnement.

2. Dispositif d'admission selon la revendication 1, **caractérisé en ce que** le joint (19) est disposé dans une rainure (20) du flasque (1), qui est formée du côté du flasque (1) adjacent à la culasse (26) et qui entoure de ce côté la section transversale libre d'au moins un canal d'admission (7, 8; 9 ,10; 11, 12).

3. Dispositif d'admission selon la revendication 2, **caractérisé en ce que** des zones sont formées dans la rainure (20) pour la mise en place des paliers (16, 17).

4. Dispositif d'admission selon l'une quelconque des revendications précédentes, **caractérisé en ce qu'**un dispositif de commutation (23) est prévu, qui est couplé par l'intermédiaire d'un mécanisme de couplage (24) avec les arbres (15) des clapets (14).

5. Dispositif d'admission selon l'une quelconque des revendications précédentes, **caractérisé en ce que** le clapet (14) est réalisé en matière plastique par surmoulage de l'arbre (15).

6. Dispositif d'admission selon l'une quelconque des revendications précédentes, **caractérisé en ce que** les paliers (16, 17) sont réalisés en matière plastique.

7. Dispositif d'admission selon l'une quelconque des revendications précédentes, **caractérisé en ce que** les paliers (16, 17) sont surmoulés avec le matériau d'étanchéité du joint (19).

8. Dispositif d'admission selon l'une quelconque des revendications précédentes, **caractérisé en ce que** les canaux d'admission (7, 8 ; 9, 10 ; 11, 12) sont réalisés pour produire un écoulement tourbillonnant dans les cylindres.
